# EUROPEAN PATENT SPECIFICATION

(11) **EP 2 664 641 B1**
(45) Date of publication and mention of the grant of the patent: **25.04.2018**
(21) Application number: 12176768.5
(22) Date of filing: 17.07.2012
(51) Int. Cl.: C08G 63/64, C08G 65/26, B01J 29/06

(54) **METHOD FOR PRODUCING POLYETHYLENE CARBONATE WITH METAL SALTS**
VERFAHREN ZUR HERSTELLUNG VON POLYETHYLENCARBONAT MIT METALLSALZEN
PROCÉDÉ DE PRODUCTION DE CARBONATE DE POLYÉTHYLÈNE AVEC SELS MÉTALLIQUES

(30) Priority: 18.05.2012 TR 201205817
(43) Date of publication of application: 20.11.2013
(73) Proprietor: Petkim Petrokimya Holding Anonim Sirekti, 35801 Izmir (TR)
(72) Inventor: Guner, Fusun, 35801 Izmir (TR); Fazil Oglu, Canibeyov Nazil, Baku (AZ); Nasirov, Fuzuli, 35801 Izmir (TR); Uyanik, Nurseli, Istanbul (TR); Sasmaz, Dursun Ali, Istanbul (TR); Xursud Oglu, Mammadov Mamed, Baku (AZ); Ivanovna, Markova Yevgeniya, Baku (AZ); Erbay, Erol, 35801 Izmir (TR); Uygun, Ekrem, 35801 Izmir (TR)
(74) Representative: Sevinç, Cenk

(56) References cited:
- US-B2- 6 844 287
- DATABASE WPI Week 201241 Thomson Scientific, London, GB; AN 2012-D89357 XP002702446, & CN 102 382 288 A (UNIV EAST CHINA SCI&TECHNOLOGY) 21 March 2012 (2012-03-21)

## Description

### Field of the Invention

The present invention relates to polyethylene carbonate (PEC) production with ethylene oxide and carbon dioxide alternating copolymerization by using Zeolite Y-P₂S₅-Me catalysts.

### Background of the Invention

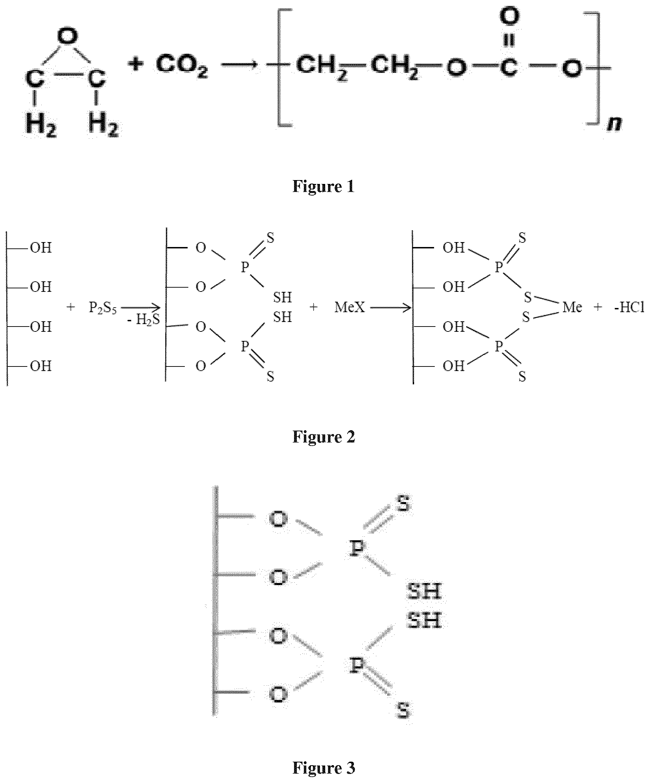

Polyethylene carbonate (PEC) is the most important member of aliphatic carbonates as it has a molecular weight of 88 g/mol and the widest field of use. Polyethylene carbonate is a biodegradable polymer which is transparent, sticky, might degrade at low temperatures, has low glass transition temperature, can be used as barrier layer at multi-layered packages due to its low oxygen barrier features. They transform into ethylene carbonate when degraded in air or nitrogen medium. When it is combusted in oxygen or air medium, water and carbon dioxide emerge as combustion product. It is a polymer hard to process because of its thermoelasticity low glass transition temperature and the difficulty of being produced in high molecular weight. Synthesizing reaction is performed with alternating copolymerization of carbon dioxide (CO₂) and ethylene oxide (EO) (Figure 1) or ring opening polymerization of ethylene carbonate.

As drug release in medicine is controlled especially by polymer degradation, polyethylene carbonate is a quite interesting polymer for controlled drug release due to its features. Even though in vivo, in enzyme medium, it is one of the several polymers whose bio-absorption is possible; this polymer received very little attention in the past.

It is possible to produce PEC with very different physical and chemical features, depending on the synthesis method. High molecular weight PEC was first synthesized by Inoue et al in 1969. Since 1969, many homogeneous and heterogeneous catalyst systems have been developed (see, i.e. Zhou, M., Takayanagi, M., Yoshida, Y., Ishii, S., and Noguchi H., 1999, Polym. Bullet., 1999,42, 419-424, Lamberta, O., Nagelea, O., Louxb, V., Bonnya, J.D., and Heussler L.M., J. Contr. Release.,2000, 67, 89-99,Coates G.W., Lansing N.Y., Allen S., Ithaca N.Y., Ikoma T.A., United States Patent, No: 0087001 A1 dated 14.04.2011, Coates and Moore, Angew. Chem. Int.Ed., 2004,43,6618-6639, Sugimoto, H., Inoue S., J. Polym. Sci.: Part A: Polym. Chem., 2004, 42, 5561-5573, Sugimoto, H., and Inoue S., Pure Appl. Chem., 2006, Vol. 78, no. 10, pp. 1823-1834, Darensbourg, D.J., and Holtcamp, M.W., Coord.Chem. Rev., 1996, 153, 155-174). Zinc, chrome, aluminum, cobalt, manganese and iron compounds are high activity catalytic systems in CO₂-epoxide copolymerization. In the copolymerization, when studied with metals such as Al and Cr, it is necessary to use co-catalyst for a good performance. Metals such as Sc, Y, Zn, Cd, Mn, Dy and Lu are active metals in copolymerization. When metals such as La, Nd, Eu, Gd, Ho, Yb, Et are used as catalyst, the combination with other metals is required in order to activate these metals. A higher catalyst yield is enabled with dinuclear and dual catalyst systems developed in the recent years.
Homogeneous and heterogeneous catalysts developed so far have very low PEC selectivity for low activity and large scale commercial applications.
Their reaction times are very long. When an effective catalyst is not used in the reaction, the reaction proceeds towards cyclic carbonates and/or homopolymerization formation (formation of ether groups). The most important bottleneck in polyalkylene carbonate is the catalyst. Neither a scientifically nor a commercially efficient catalyst has been produced yet.

Ethylene oxide is widely used in epoxide-carbon dioxide alternating copolymerizations. The first ethylene oxide/carbon dioxide alternating copolymerization was performed by Inoue et al. In copolymerization, diethyl zinc and water were used as catalyst in the ratio of 1:1 mol. It was observed that the reaction yield was in the range of 1.9-38.5 g polymer/g catalyst. As the result of the reaction, ethylene glycol and ethylene carbonate were formed as by-product. The resulting polyethylene carbonate had low molecular weight (Mw 50,000-55,000 g/mol).

In 1997, Murat ACEMOGLU et al used the same catalyst system by treating with CO₂ for 12 hours before the reaction and they found the yield of polyethylene carbonate between 19-66%. Again, Murat ACEMOGLU et al used diethyl zinc/ethylene glycol catalyst system in ethylene oxide-carbon dioxide copolymerization. Copolymerization was performed in dioxane and THF medium. The yield was found between12-52%. Ethylene carbonate was formed as by-product. Mw was found in the range of 65,700-328,000.

In 2000, Ki-Soo Kim et al used zinc glutarate with a chain terminator as catalyst, in ethylene oxide-carbon dioxide copolymerization. The reaction was performed in dichloromethane medium. The yield is 31-51 g polymer/g catalyst. Mw, is in the range of 700-2100 g/mol. In ethylene oxide-carbon dioxide copolymerizations which are made with zinc dicarbonate catalysts, polyethylene carbonate yield is very low and the resulting copolymers have low molecular weight. Copolymerizations were performed in a solvent medium.

Coates et al (2011) synthesized polyethylene carbonate in the presence of a metal complex from ethylene oxide and carbon dioxide copolymerization. N,N'bis(salisiden)-1,2-cyclohexyldiamine metal complex is an efficient catalyst in this copolymerization and low ether included PEC is synthesized. In the synthesis of this catalyst , Zn, Co, Cr, Ru, Al, Ti and Mn are used as metal. Copolymer which is rich in carbonate bonds is produced but copolymer yields are very low.

The Australian patent document no. AU2009336723, an application in the state of the art, discloses polyethylene carbonate (PEC) nanoparticles comprising pharmacologically active substances, their production method and their use for sustained release of the pharmacologically active agent after application. In the Australian patent document no. AU2009336723, PEC which is synthesized by using diethyl zinc/ethylene glycol catalyst system with CO₂-EO copolymerization is firstly reduced to nano size. Afterwards, the radiating polymer is bound to the nano particle with covalent bond. Biological (in vivo and in vitro) studies were carried by loading various drugs to these PECs reduced to nano size. The document discloses getting ready-made PECs to nano size and pharmacological experiments more than PEC production.

In the United States patent document no. US2011218321, an application in the state of the art, discloses production of polyalkylene carbonates via polymerization of carbon dioxide with at least one epoxide of the general Formula (I). A zinc salt of C4-8-alkanedicarboxylic acids is used as catalyst. In the United States patent document no. US2011218321, propylene oxide and carbon dioxide copolymerization where zinc glutarate and zinc adipate are used as catalyst is disclosed. The invention also includes the use of carboxylic acid and acidic ion exchangers. Carboxylic acids can be mono and polycarboxcylic acids. Polycarboxcylic acids can be low molecular weighed or polymeric. These carboxylic acids are used in purification of polypropylene carbonate (PPC), especially in separation of polymerization catalysts. Also, copolymerization is performed in a solvent medium.

The Japanese patent document no. JP3028227, an application in the state of the art, discloses a catalyst which is excellent in polymerization activity and useful for obtaining a polyalkylene carbonate from CO₂ and an epoxide in good efficiency by adding zinc sulfide to the system. The used zinc dicarboxylate catalyst is synthesized from the reaction of zinc oxide with carboxylic acid in 1.4 dioxane medium. Zinc sulfide is added to the medium to increase zinc oxide's contact with carboxylic acid. The Japanese patent document no. JP2000080160, an application in the state of the art, discloses production of a poly(alkylene carbonate) by a simple operation under gentle conditions without using toxic phosgene and without causing side reactions by reacting a dialkylene carbonate with an alkane diol in the presence of an enzyme. The invention discloses a polyalkylene carbonate production method similar to the research subject invention. The Japanese patent document no. JP2000080160 discloses aliphatic carbonate production wherein an enzyme is catalyzed. Polyalkylene carbonate is produced with polycondensation polymerization. Here, disclosed is polymerization of a dialkylene carbonate such as diethyl carbonate in the presence of an enzyme with a diol such as 1.6-hexane diol.
The Japanese patent document no. JP2006257374, an application in the state of the art, discloses a catalyst more effective than ever for use in a production method of polyalkylene carbonate obtained from raw materials comprising a cyclic ether and carbon dioxide. In the polyalkylene carbonate production method, a zinc oxide-amino acid mixed catalyst, which has never been known before, is used as catalyst. It is stated that this catalyst has a high effect in the production of polymers which have high molecular weight. Moreover it is stated that; from an environmental point of view this production method has another benefit since it can drastically reduce the solvent consumption.
Also, United States patent documents no. US3585168; US4960869; US4981948; US5041469; US5026676; US6100372; US6262127; US6720434; US6743570; US6815529; US6844287; US7743570t; US2011/0087001 A1; US2011/0257296 A1 can be shown as referring to PEC production.
The Chinese patent document no. CN102382288, an application in the state of the art, discloses an alumina-modified silica gel supported catalyst, and a preparation method and application thereof.

### Summary of the Invention

The invention relates to a method for producing polyethylene carbonate as defined in the claims.

The objective of the invention is to provide a method for producing polyethylene carbonate with metal salts wherein EO-CO₂ alternating copolymerization with a new catalyst system never known before (Zeolite Y-P₂S₅-Me, Me; Zn, Co, Cr, Ni) is carried.
Another objective of the invention is to synthesize high yield PEC with the content of zeolite Y-P₂S₅-Me catalyst and low ether and cyclic carbonate.

Still another objective of the invention is to provide a method for producing polyethylene carbonate with metal salts wherein the zeolite catalyst that is preferred as P₂S₅ heat stabilizer in the content thereof is used.

A further objective of the invention is to provide a method for producing polyethylene carbonate with metal salts wherein the catalyst can be used repeatedly without degradation as it can be regained.

### Detailed Description of the Invention

"A method for producing polyethylene carbonate with metal salts" developed to fulfill the objective of the present invention is illustrated in the accompanying figures, in which;
Figure 1 is the view of copolymerization of ethylene oxide-carbon dioxide.
Figure 2 is the schematic view of the zeolite Y-P₂S₅-metal catalysts synthesis.
Figure 3 is the schematic view of the molecular structure of zeolite Y-P₂S₅.
Figure 4 is the schematic view of the zeolite Y-P₂S₅-Zn catalyst structure.
Figure 5 is the view of PEC H-NMR spectrum synthesized with zeolite Y-P₂S₅-Zn catalyst.
Figure 6 is the schematic view of the zeolite Y-P₂S₅-Cr catalyst structure.
Figure 7 is the view of the molecular structure of PEC synthesized with zeolite Y-P₂S₅-Cr catalyst.
Figure 8 is the view of PEC H-NMR spectrum synthesized with zeolite Y-P₂S₅-Cr catalyst.
Figure 9 is the schematic view of the zeolite Y-P₂S₅-Ni catalyst structure.
Figure 10 is the schematic view of EO and CO₂ copolymerization.
Figure 11 is the view of the molecular structure of PEC synthesized with zeolite Y-P₂S₅-Ni catalyst.
Figure 12 is the view of PEC H-NMR spectrum synthesized with zeolite Y-P₂S₅-Ni catalyst.
Figure 13 is the schematic view of the zeolite Y-P₂S₅-Co catalyst structure.
Figure 14 is the schematic view of EO-CO₂ copolymerization.
Figure 15 is the view of the molecular structure of PEC synthesized with zeolite Y-P₂S₅-Co catalyst.
Figure 16 is the view of PEC H-NMR spectrum synthesized with zeolite Y-P₂S₅-Co catalyst.

The inventive polyethylene carbonate production depends on the fact that carbon dioxide (CO₂) and ethylene oxide (EO) give alternating copolymerization reaction in the presence of zeolite Y-P₂S₅-Me catalysts. The method of producing polyethylene carbonate with zeoliteY-P₂S₅-Me catalyst, relates to ethylene oxide and carbon dioxide alternating copolymerization carried out with zeolite zeoliteY-P2S5-Me catalysts. In catalyst synthesis, zeolite-Y is used as carrier. Even though the catalyst is regained and reused in copolymerization, it remains at ppm levels in PEC. Thus, P₂S₅ which has a bridge function between OH groups and metal salts in the catalyst structure is also used as PEC heat stabilizer. One of Zn, Cr, Ni and Co metals is used as active centre in the catalyst structure. By means of the invention, a novel metal catalyst which is not known before is provided for EO-CO₂ alternating copolymerization. Copolymerization reactions are carried out in monomer medium, at 40 °C and 40 atm pressure and by use of 1 g catalyst.

The synthesis of zeolite Y-P₂S₅-metal catalysts used in PEC production is performed according to the reaction given in Figure 2. It should be mixed constantly and the reaction of zeolite Y and diphosphor pentasulfide (P₂S₅) should be performed in a reactor. Thus, the chemical binding reaction of OH ions on zeolite Y and phosphor pentasulfide (P₂S₅) is performed. As a result of the reaction, H₂S is removed off the medium. The sulfides bound with hydrogen in the structure formed as a result of the chemical reaction between OH ions and P₂S₅ react with the metal salts (ZnCl₂, CrCl₃, NiCl₂, CoCl₂) added to the medium. At the end of the reaction, metals in the salt structure get included in zeolite structure and HCI acid is removed from the medium.

In the preferred embodiment of the invention, P₂S₅ (diphosphor pentasulfur) zeolite Y (Figure 3) is used in catalyst synthesis in order to decrease degradation of the synthesized PEC with heat at low temperatures.

In the preferred embodiment of the invention, the reaction is performed in monomer medium for the purpose of removing the obligation of solvent disposal from the medium after the reaction.

In the preferred embodiment of the invention, as the result of the reaction, zeolite Y-P₂S₅-Me catalysts are regained and are reused in EO-CO₂ copolymerizations.

### Study 1. Zeolite Y-P₂S₅-Zn catalyst synthesis

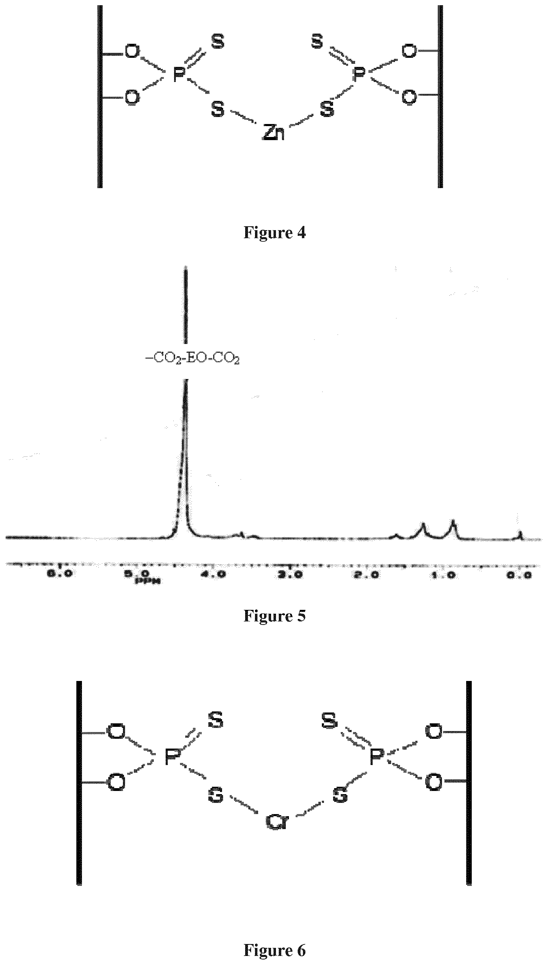

Firstly, the chemical binding of OH ions on zeolite Y and phosphor pentasulfide (P₂S₅) was performed. OH ions on zeolite T reacted with P₂S₅ and H₂S was removed from the medium. ZnCl₂ salt was added for 2.5-3 hours in ethanol medium the reaction temperature of which was 45-50 °C. As a result of the reaction, HCl was removed off the medium. As the result of the reaction, those which didn't reacted were removed from the medium. The product was dried in the drying oven at 70 °C for 8 hours. In Figure 4, the chemical structure of the synthesized catalyst is given.

In copolymerizations carried out with Zeolite Y-P₂S₅-Zn catalyst, the amount of used EO is 900 ml, the pressure is 40 atm, reaction time is 24 hours and catalyst amount is 1 g. The reaction was performed in monomer medium. Long reaction times cause the molecular weight of the synthesized copolymer to decrease. The reason of this decrease in molecular weight is the formation of cyclic carbonates by side reactions occurring simultaneously with copolymer formation reaction and by depolymerization of the produced copolymers; and thus the slower start of the reaction and the rapid growth of the formed particles. Therefore, after the experiments, optimum reaction time was found as 24 hours with Zeolite Y-P₂S₅-Me catalysts. Experiment results are shown in Chart 1.

**Chart 1: the results of experiments of EO/CO₂ copolymerization with Zeolite Y-P₂S₅-Zn.**

| No. | Temper ature (°C) | Tg^{a} (°C) | Tmax^{b} (°C) | Selectivit y^{c} (%) | Yield (g polymer/g catalyst) | Mₙ/M_{W}/PI^{d} |
|---|---|---|---|---|---|---|
| 1 | 20 | 22 | 212 | 83 | 350 | 40.0k/95.5k/2.4 |
| 2 | 40 | 25 | 218 | 99 | 884 | 37.9k/144.2k/3.8 |
| 3 | 60 | 24 | 212 | 96 | 716 | 41.5k/118.0k/2.8 |
| 4 | 80 | 25 | 210 | 94 | 700 | 40.5k/110.0k/2.7 |

| | | | | | | |
|---|---|---|---|---|---|---|
| a glass transition temperature b maximum degradation temperature c Selectivity: PEC amount (g)/ Total amount (PEC+EC) g. d Mn (number average molecular weight), Mw (weight average molecular weight), PI (Mw/Mn) | | | | | | |

As the result of copolymerizations, characterization determination is done at PEC synthesized as the result of Experiment 2. Polyethylene carbonate selectivity of zeolite Y-P₂S₅-Zn catalyst on ethylene oxide and carbon dioxide copolymerization is 99% PEC and 1% ethylene carbonate in weight. Copolymer yield is 884 g polymer/g catalyst. As the result of GPC analysis, the average molecular weight (Mw) of the product was found to be 144,200 g/mol. In the product, there is low molecular weight PEC with an average molecular weight (Mw) of 5000-7000 g/mol, about 7% in weight. When FTIR spectrums of copolymers synthesized with ZeoliteY-P₂S₅-Zn catalyst are analyzed, the fact that there are dominant absorption peaks with wave length of 1750 cm⁻¹ and 1223 cm⁻¹ and absorption peaks seen at wave length of 1147 cm⁻¹, 1383 cm⁻¹, 1107 cm⁻¹, 1030 cm⁻¹, 858 cm⁻¹, 785 cm-¹ shows that the formed PECs include ester and carbonate groups. It was diagnosed that PEC, which is synthesized with DSC and XRD analysis, was an amorphous thermoplastic copolymer. It was diagnosed that copolymers synthesized with Zeolite Y-P₂S₅-Zn catalyst were alternating copolymers (EO-CO₂-EO-CO₂) with NMR analysis. In the reaction, no EO homopolymerization occurred. Glass transition temperature of polyethylene carbonate is 25 °C and the degradation temperature is 218 °C. With ZeoliteY-P₂S₅-Zn catalyst, alternating copolymer with high selectivity, 100% carbonate bonds and high molecular weight was synthesized for 24 hours. It was diagnosed that copolymers synthesized with Zeolite Y-P₂S₅-Zn catalyst under the conditions of experiment 2 were alternating copolymers with NMR analysis. Peaks observed in HNMR spectrum were (CDCl3), 1.33 ppm, 4.36 ppm(s, CH₂, C=OOCH₂CH₂O). It was observed that alternation in this way was -CO₂-EO-CO₂-. NMR spectrum of polyethylene carbonate synthesized with catalyst systems are given in Figure 5.

With ZeoliteY-P₂S₅-Zn catalyst, at 40 °C temperature and 40 atm pressure, with EO and CO₂ copolymerization, alternating PEC was synthesized at high yield, high selectivity and high molecular weight. The product features of PEC synthesized under these conditions were examined. According to DSC and TGA thermograms, glass transition temperature of PEC synthesized with ZeoliteY-P₂S₅-Zn catalyst is 25 °C and the degradation temperature is 218 °C. Density of synthesized PECs at 23 °C was found as 1.42 g/cm³ by density-gradient technique. Transparency of the synthesized copolymer was measured as 3%. Permeabilities of oxygen and water vapor are 31 cc.mil/m².day.atm, 50 cc.mil/m².day.atm relatively. Melt flow index (MFI) of copolymer at 150 °C/2.16 kg was found as 1.54 g/10 min.

### Study 2. Zeolite Y-P₂S₅-Cr catalyst synthesis

Firstly, the chemical bonding reaction of OH ions on zeolite Y and phosphor pentasulfide (P₂S₅) was performed. OH ions on zeolite T reacted with P₂S₅ and H₂S was removed from the medium. CrCl₃ salt was added for 2.5-3 hours in ethanol medium the reaction temperature of which was 45-50 °C. As a result of the reaction, HCl was removed off the medium. As the result of the reaction, those which didn't reacted were removed from the medium. The product was dried in the drying oven at 70 °C for 8 hours. In Figure 6, the chemical structure of the synthesized catalyst is given.

In copolymerizations carried out with Zeolite Y-P₂S₅-Cr catalyst, the amount of used EO is 900 ml, the pressure is 40 atm, reaction time is 24 hours and catalyst amount is 1 g. The reaction was performed in monomer medium. Experiment results are shown in Chart 2.

**Chart 2: the results of experiments of EO/CO₂ copolymerization with Zeolite Y-P₂S₅-Cr.**

| No | Temper ature (°C) | Tg^{a} (°C) | Tmax^{b} (°C) | Selectivit y^{c} (%) | Yield (g polymer/g catalyst) | Mₙ/M_{W}/PI |
|---|---|---|---|---|---|---|
| **1** | 20 | 20 | 215 | 86 | 250 | 50.1k/124.5k/2.5 |
| **2** | 40 | 23 | 220 | 97 | 643 | 37.9/138.5k/3.6 |
| **3** | 60 | 22 | 210 | 95 | 597 | 41.5k/125.0k/3.0 |
| **4** | 80 | 22 | 210 | 91 | 377 | 34.5k/120.0k/3.5 |

| | | | | | | |
|---|---|---|---|---|---|---|
| a glass transition temperature b maximum degradation temperature c Selectivity: PEC amount (g) / Total amount (PEC+EC) g. d Mn (number average molecular weight, Mw (weight average molecular weight), PI (Mw/Mn) | | | | | | |

As the result of copolymerizations, characterization determination is done at PEC synthesized as the result of Experiment 2. As the result of copolymerization experiments, copolymer selectivity was determined as 97% PEC and 3% ethylene carbonate in weight. Copolymer yield is 643 g polymer/g catalyst. As the result of GPC analysis, average molecular weight (Mw) is 138,500 g/mol and molecular weight distribution is narrow and bimodal. A low molecular weight PEC with an average molecular weight (Mw) of 5000-7000 g/mol, about 6% in weight occurred. When FTIR spectrums of copolymers synthesized with ZeoliteY-P₂S₅-Zn catalyst are analyzed, the fact that there are dominant absorption peaks with wave length of 1750 cm⁻¹ and 1223 cm⁻¹ and absorption peaks seen at wave length of 1147 cm⁻¹, 1383 cm⁻¹, 1107 cm⁻¹, 1030 cm⁻¹, 858 cm⁻¹, 785 cm-¹ shows that the formed PECs include ester and carbonate groups. With DSC and XRD analysis, it was observed that the synthesized copolymer was amorphous thermoplastic.

It was diagnosed that copolymers synthesized with Zeolite Y-P₂S₅-Cr catalyst under the conditions of experiment 2 were alternating copolymers with NMR analysis.

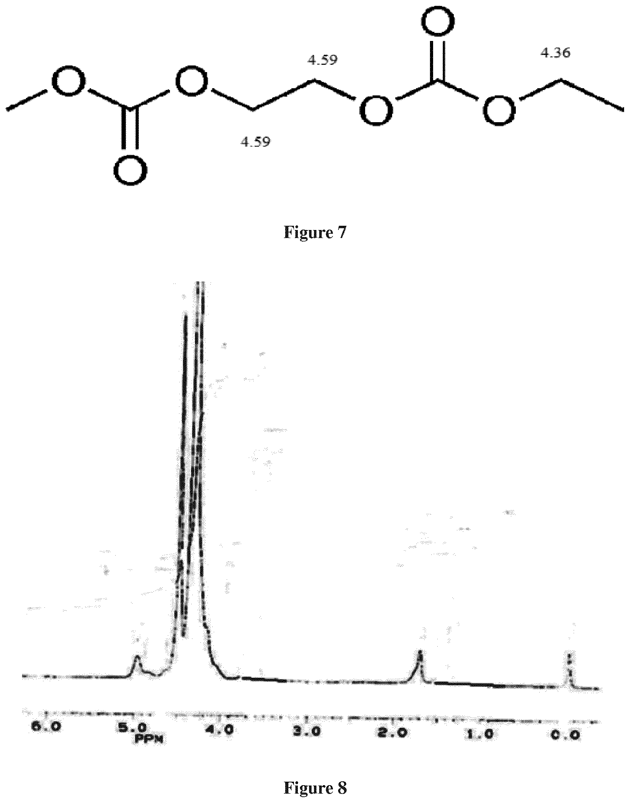

From the peaks observed in HNMR spectrum, it was determined that there were (CDCl3), 1.33 ppm, 4.36 ppm(s, CH₂, C=OOCH₂CH₂O) and 4.49 ppm(s, 4H, ethylene carbonate) in the product. It was observed that alternation in this way was - CO₂-EO-CO₂-EO. NMR spectrum of polyethylene carbonate synthesized with catalyst systems are given in Figure 8.

With ZeoliteY-P₂S₅-Cr catalyst, at 40 °C temperature and 40 atm pressure, with EO and CO₂ copolymerization, alternating PEC is synthesized at high yield, high selectivity and high molecular weight. The product features of PEC synthesized under these conditions were examined. According to DSC and TGA thermograms, glass transition temperature of PEC synthesized with ZeoliteY-P₂S₅-Cr catalyst is 23 °C and the degradation temperature is 220 °C. Density of synthesized PECs at 23 °C was found as 1.38 g/cm³ by density-gradient technique. Transparency of the synthesized copolymer was measured as 8%. Permeabilities of oxygen and water vapor are 29 cc.mil/m².day.atm, 45 cc.mil/m².day.atm relatively. Melt flow index (MFI) of copolymer at 150 °C/2.16 kg was found as 1.50 g/10 min.

### Study 3. Zeolite Y-P₂S₅-Ni catalyst synthesis

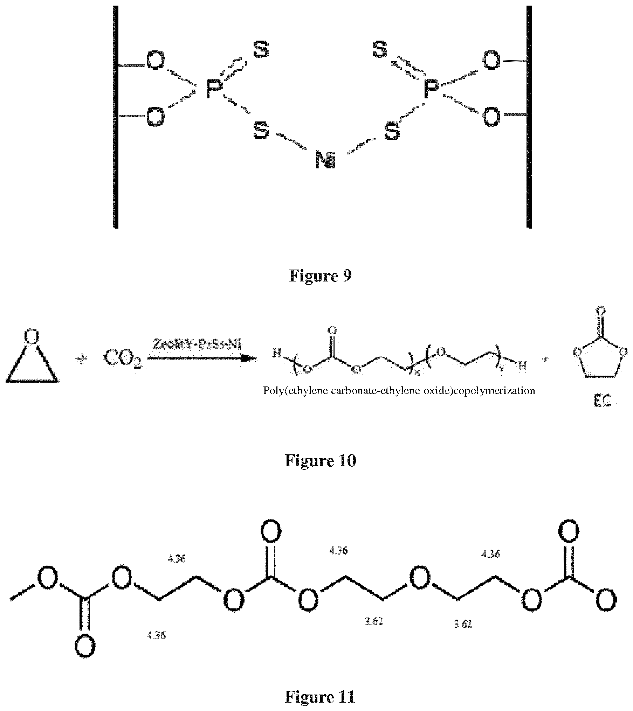

Firstly, the chemical bonding reaction of OH ions on zeolite Y and phosphor pentasulfide (P₂S₅) was performed. OH ions on zeolite T reacted with P₂S₅ and H₂S was removed from the medium. NiCl₂ salt was added for 2.5-3 hours in ethanol medium the reaction temperature of which was 45-50 °C. As a result of the reaction, HCl was removed off the medium. As the result of the reaction, those which didn't reacted were removed from the medium. The product was dried in the drying oven at 70 °C for 8 hours. In Figure 9, the chemical structure of the synthesized catalyst is given.

In copolymerizations carried out with Zeolite Y-P₂S₅-Ni catalyst, the amount of used EO is 900 ml, the pressure is 40 atm, reaction time is 24 hours and catalyst amount is 2 g. The reaction was performed in monomer medium. Experiment results are shown in Chart 3. With ZeoliteY-P₂S₅-Ni catalyst, high carbonate included copolymer was produced in EO/CO₂ copolymerization at 40 atm. Polyethylene carbonate polymer is the block copolymer consisting of polyethylene carbonate and polyethylene oxide (Figure 10). As temperature rises, the reaction proceeds towards ethylene carbonate formation. Accordingly, copolymer yield and selectivity decreased.

As the result of copolymerizations, characterization analyses are done on PEC synthesized as the result of Experiment 2. As the result of copolymerization, copolymer selectivity was determined as 90% PEC and 10% ethylene carbonate in weight. Copolymer yield is 454 g polymer/g catalyst. As the result of GPC analysis, average molecular weight (Mw) is 124,000 g/mol and molecular weight distribution is narrow and bimodal. A low molecular weight copolymer with an average molecular weight (Mw) of 5000-7000 g/mol, about 4% in weight occurred.

**Chart 3: the results of experiments of EO/CO₂ copolymerization with Zeolite Y-P₂S₅-Ni.**

| No. | Temper ature (°C) | Tg^{a} (°C) | Tmax^{b} (°C) | Selectivit y^{c} (%) | Yield (g polymer/g catalyst) | Mₙ/M_{W}/PI |
|---|---|---|---|---|---|---|
| 1 | 20 | 14 | 210 | 76 | 235 | 40.0k/110.5k/1.9 |
| 2 | 40 | 13 | 212 | 90 | 459 | 40.5k/127.0k/2.1 |
| 3 | 60 | 11 | 211 | 85 | 420 | 41.5k/118.0k/2.0 |
| 4 | 80 | 11 | 209 | 81 | 386 | 40.5k/115.0k/2.1 |

| | | | | | | |
|---|---|---|---|---|---|---|
| a Glass transition temperature b maximum degradation temperature c Selectivity: PEC amount (g) / Total amount (PEC+EC) g. d Mn (number average molecular weight, Mw (weight average molecular weight), PI (Mw/Mn) | | | | | | |

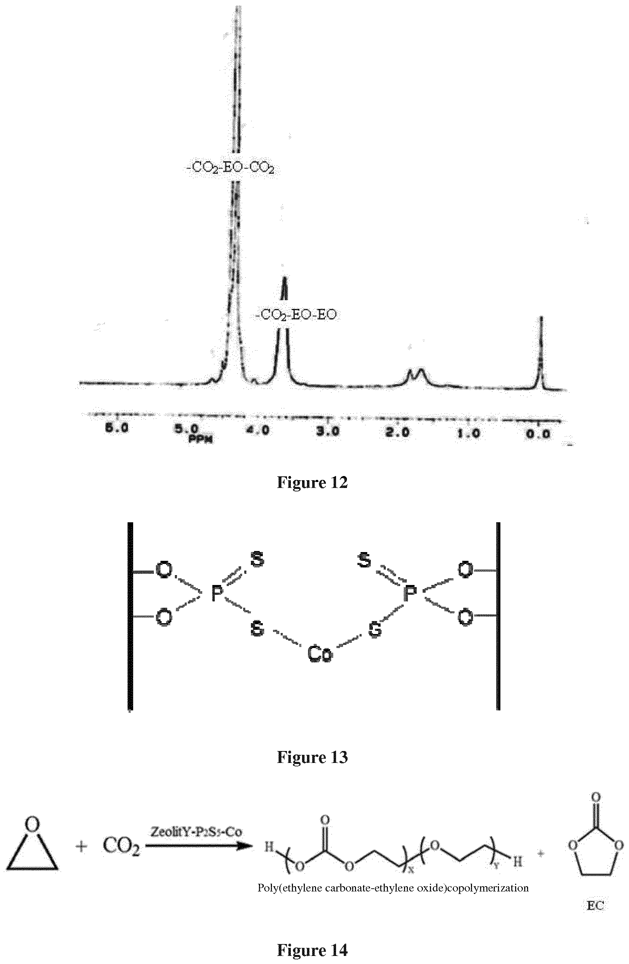

When FTIR spectrums of copolymers synthesized with ZeoliteY-P₂S₅-Ni catalyst are analyzed, the fact that there are dominant absorption peaks with wave length of 1750 cm⁻¹ and 1223 cm⁻¹ and absorption peaks seen at wave length of 1147 cm⁻¹, 1383 cm⁻¹, 1107 cm⁻¹, 1030 cm⁻¹, 858 cm⁻¹, 785 cm-¹ shows that the formed PECs include ester and carbonate groups. As the result of the DSC analysis, the glass transition temperature of the synthesized copolymer is 13 °C and the melting temperature is 50 °C. It is thought that copolymer consists of PEC and polyethylene oxide (PEO) block copolymer. It was determined that the peaks observed in HNMR spectrum of copolymers synthesized with Zeolite Y-P₂S₅-Ni catalyst under the conditions of experiment 2 were (CDCl3), 1.8-1.6 ppm (s,CH₂ aliphatic) ppm, 4.36 ppm (s, CH₂, C=OOCH₂CH₂O) and 3.62 ppm (s,OCH₂CH₂O) in the product (Figure 11). It was observed that alternation was -CO₂-EO-CO₂-EO-EO-CO₂. Copolymer includes 97% carbonate and 3% ether bonds in weight. NMR spectrum of polyethylene carbonate synthesized with catalyst systems are given in Figure 12.

With ZeoliteY-P₂S₅-Ni catalyst, at 40 °C temperature and 40 atm pressure, with EO and CO₂ copolymerization, alternating PEC is synthesized at high yield, high selectivity and high molecular weight. The product features of PEC synthesized under these conditions were also examined. According to DSC and TGA thermograms, glass transition temperature of PEC synthesized with ZeoliteY-P₂S₅-Ni catalyst is 23 °C and the degradation temperature is 212 °C. Density of synthesized PECs at 23 °C was found as 1.29 g/cm³ by density-gradient technique. Transparency of the synthesized copolymer was measured as 8%. Permeabilities of oxygen and water vapor are 82 cc.mil/m².day.atm, 124 cc.mil/m².day.atm relatively. Copolymer synthesized by ZeoliteY-P₂S₅-Ni catalyst is not an excellent alternating copolymer. Formation of ether structure affects gas barrier features negatively. Melt flow index (MFI) of copolymer at 150 °C/2.16 kg was found as 1.45 g/10 min.

### Study 4. Zeolite Y-P₂S₅-Co catalyst synthesis

Firstly, the chemical binding of OH ions on zeolite Y and phosphor pentasulfide (P₂S₅) was performed. OH ions on zeolite Y reacted with P₂S₅ and H₂S was removed from the medium. CoCl₂ salt was added for 2.5-3 hours in ethanol medium the reaction temperature of which was 45-50 °C. As a result of the reaction, HCl was removed off the medium. As the result of the reaction, those which didn't reacted were removed from the medium. The product was dried in the drying oven at 70 °C for 8 hours. In Figure 13, the chemical structure of the synthesized catalyst is given.

In copolymerizations carried out with Zeolite Y-P₂S₅-Co catalyst, the amount of used EO is 900 ml, the pressure is 40 atm, reaction time is 24 hours and catalyst amount is 2 g. The reaction was performed in monomer medium. Experiment results are shown in Chart 4. With ZeoliteY-P₂S₅-Co catalyst, high carbonate included copolymer was produced in EO/CO₂ copolymerization at 40 atm. Polyethylene carbonate polymer is the block copolymer consisting of polyethylene carbonate and polyethylene oxide (Figure 14). As temperature rises, the reaction proceeds towards ethylene carbonate formation. Accordingly, copolymer yield and selectivity decreased.

**Chart 4: the results of experiments of EO/CO₂ copolymerization with Zeolite Y-P₂S₅-Co.**

| No. | Tempera ture (°C) | Tg^{a} (°C) | Tmax^{b} (°C) | Selectivity^{c} (%) | Yield (g polymer/g catalyst) | Mₙ/M_{W}/PI |
|---|---|---|---|---|---|---|
| 1 | 20 | 14 | 218 | 95 | 295 | 35.0k/110.5k/3.2 |
| 2 | 40 | 15 | 219 | 99 | 801 | 40.2k/124.8k/3.2 |
| 3 | 60 | 14 | 217 | 97 | 676 | 41.5k/123.3k/3.0 |
| 4 | 80 | 12 | 216 | 93 | 612 | 34.7k/112.6k/3.2 |

| | | | | | | |
|---|---|---|---|---|---|---|
| a Glass transition temperature b maximum degradation temperature c Selectivity: PEC amount (g) / Total amount (PEC+EC) g. d Mn (number average molecular weight, Mw (weight average molecular weight), PI (Mw/Mn) | | | | | | |

As the result of copolymerizations, characterization analysis is done on PEC synthesized as the result of Experiment 2. As the result of copolymerization, copolymer selectivity was determined as 99% PEC and 1% ethylene carbonate in weight. Copolymer yield is 801 g polymer/g catalyst. As the result of GPC analysis, average molecular weight (Mw) is 127,800 g/mol and molecular weight distribution is narrow and bimodal. A low molecular weight copolymer with an average molecular weight (Mw) of 5000-7000 g/mol, about 2% in weight occurred.

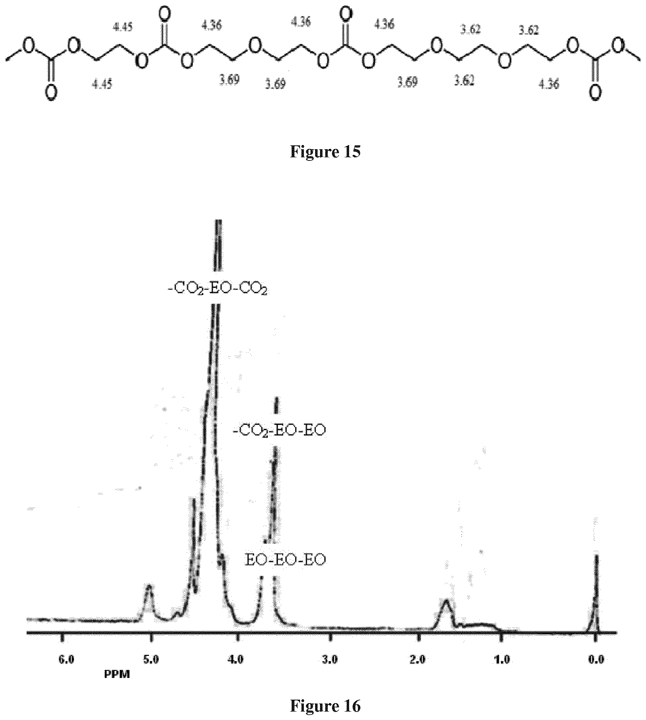

When FTIR spectrums of copolymers synthesized with ZeoliteY-P₂S₅-Co catalyst are analyzed, the fact that there are dominant absorption peaks with wave length of 1750 cm⁻¹ and 1223 cm⁻¹ and absorption peaks seen at wave length of 1147 cm⁻¹, 1383 cm⁻¹, 1107 cm⁻¹, 1030 cm⁻¹, 858 cm⁻¹, 785 cm-¹ shows that the formed PECs include ester and carbonate groups. As the result of the DSC analyses, the glass transition temperature of the synthesized copolymer is 15 °C and the melting temperature is 42 °C. It is thought that copolymer consists of PEC and polyethylene oxide (PEO) block copolymer. It was determined that the peaks observed in HNMR spectrum of copolymers synthesized with Zeolite Y-P₂S₅-Co catalyst under the conditions of experiment 2 were (CDCl3), 1.8-1.6 ppm (s,CH₂ aliphatic ppm, 3.62 ppm (s, CH₂, C=OOCH₂CH₂O), 3.69 ppm (s,OCH₂CH₂O), 4.36 ppm and 4.45 ppm in the product (Figure 15). It was observed that alternation was -CO₂-EO-CO₂-EO-EO-CO₂-EO-EO-EO-CO₂. Copolymer includes 95% carbonate and 5% ether bonds. NMR spectrum of polyethylene carbonate synthesized with catalyst systems are given in Figure 16.

The product features of PEC synthesized under these conditions were examined. According to TGA thermograms, the degradation temperature of PEC synthesized with ZeoliteY-P₂S₅-Co catalyst is 219 °C Density of synthesized PECs at 23 °C was found as 1.46 g/cm³ by density-gradient technique. Transparency of the synthesized copolymer was measured as 11%. Permeabilities of oxygen and water vapor are 80 cc.mil/m².day.atm, 120 cc.mil/m².day.atm relatively. Copolymer synthesized by ZeoliteY-P₂S₅-Co catalyst is not an excellent alternating copolymer. Formation of ether structure affects gas barrier features negatively. Melt flow index (MFI) of copolymer at 150 °C/2.16 kg was found as 1.6 g/10 min.

Ethylene oxide - CO₂ copolymerization is performed in an autoclave with mechanical mixer of 3 liters (Büchi AG, CH-8610 glasuster). After the catalyst (1g) is added into the autoclave, the whole system is passivized at a temperature of 100 °C under vacuum for 16 hours. No solvent is used in copolymerization. The catalyst is dried at 100 °C for 24 hours before being used in copolymerization. Ethylene oxide (900ml) is fed by liquid mass flow meter. Ethylene oxide is fed to the reactor with the lines through which the cooling water at 4 °C passes. Autoclave is brought to the pressure level of 40 atm by the carbon dioxide tube. Copolymerization is performed at 40 °C and 850 rpm mixer speed. After 24 hours, the reactor pressure is decreased and the reactor is cooled to room temperature. Copolymer is taken off the reactor and is dried in vacuum oven at room temperature. The product is then weighed. The synthesized product is extracted with ether in order to separate by-products. Selectivity is calculated by dividing the amount of resulting polyethylene carbonate to total product amount. The resulting PEC is dried under vacuum at 50 °C for 24 hours.

As a result of the carried experiments, it was determined that synthesized ZeoliteY-P₂S₅-Zn, ZeoliteY-P₂S₅-Cr, ZeoliteY-P₂S₅-Ni, ZeoliteY-P₂S₅-Co catalysts are effective catalysts for CO₂-EO copolymerization. One of the most important advantages of the invention is that catalysts are regained and reused as a result of copolymerization.

ZeoliteY-P₂S₅-Me catalysts are homogeneous catalysts. Copolymers with high molecular weight, copolymer selectivity and carbonate bonds are obtained. The reaction time is short.

Within the framework of these basic concepts, it is possible to develop a wide variety of embodiments of the inventive "polyethylene carbonate production method with Zeolite Y-P₂S₅-Me catalyst". The invention cannot be limited to the examples described herein; it is as defined in the claims.

## Claims

1. Method for producing polyethylene carbonate with metal salts, which is carried out for increasing the yield of copolymerization in polyethylene carbonate production, **characterized in that** it consists of the steps of
- mixing and reacting P₂S₅ solution with zeolite Y,
- reacting the new structure formed by P₂S₅ and zeolite Y with metal salt,
- removing those that do not react off from the mixture,
- drying the reaction product zeolite Y-P₂S₅-Me catalyst in drying oven,
- feeding EO (ethylene oxide) solution and CO₂ (carbon dioxide gas to the reactor fort he purpose of PEC (polyethylene carbonate) production,
- adding synthesized zeolite Y-P₂S₅-Me catalysts to the reactor in PEC production with EO and CO₂ copolymerization, and carrying out the reaction,
- separating the catalyst from the copolymer after copolymerization,
- obtaining PEC copolymer as the final product.

2. A method for producing polyethylene carbonate with metal salts according to Claim 1, **characterized by** using P₂S₅ as heat stabilizer in Y-P₂S₅-Me zeolite catalyst structure for the product to resist against high temperatures without degradation.

3. Method for producing polyethylene carbonate with metal salts according to any of the preceding claims, **characterized by** zeolite Y-P₂S₅ metal catalyst, wherein at least one metal salt, which is selected from the metal salt group of ZnCl₂, CrCl₃, NiCl₂ and CoCl₂, is used in order to be used in PEC production.

4. Method for producing polyethylene carbonate with metal salts according to any of the claims, **characterized in that** the reaction is performed with metal salt addition in ethanol medium at 45-50 °C temperature range for a time of 2.5-3 hours in the step of reacting the structure formed as a result of the OH ions on zeolite Y and P₂S₅ compound with metal salts.

5. Method for producing polyethylene carbonate with metal salts according to any of the preceding claims, **characterized in that** the catalyst is dried in the drying oven at 40-80 °C for 8-24 hours in order to be made available for use.

6. Method for producing polyethylene carbonate with metal salts according to any of the preceding claims, **characterized by** using zeoliteY-P₂S₅-Zn catalyst in ethylene oxide and carbon dioxide copolymerization in order for the reaction to have polyethylene carbonate selectivity of 99% in weight and to synthesize polyethylene carbonate; which has average molecular weight of (Mw) 144,200 g/mol; includes low molecular weight PEC with an average molecular weight of (Mw) 5000-7000 g/mol, 7% in weight; has a glass transition temperature of 25 °C, a degradation temperature of 218 °C and copolymer yield of 884 g polymer/g catalyst; and whose alternating copolymer structure is EO-CO₂-EO-CO₂.

7. Method for producing polyethylene carbonate with metal salts according to any of the Claims 1 to 5, **characterized by** using zeoliteY-P₂S₅-Cr catalyst in ethylene oxide and carbon dioxide copolymerization in order for the reaction to have polyethylene carbonate selectivity of 97% in weight, and to synthesize polyethylene carbonate; which has average molecular weight of (Mw) (Mw) 138,500 g/mol; includes low molecular weight PEC with an average molecular weight of (Mw) 5000-7000 g/mol, 7% in weight; has a glass transition temperature of 23 °C, a degradation temperature of 220 °C and copolymer yield of 643 g polymer/g catalyst; and whose the alternating copolymer structure is EO-CO₂-EO-CO₂.

8. Method for producing polyethylene carbonate with metal salts according to any of the Claims 1 to 5, **characterized by** using zeoliteY-P₂S₅-Ni catalyst which, in ethylene oxide and carbon dioxide copolymerization in order for the reaction to have polyethylene carbonate selectivity of 90% in weight, and to synthesize polyethylene carbonate; which has average molecular weight of (Mw) (Mw) 124,000 g/mol; includes low molecular weight PEC with an average molecular weight of (Mw) 5000-7000 g/mol, 4% in weight; has a glass transition temperature of 13 °C, a melting temperature of 50 °C and copolymer yield of 454 g polymer/g catalyst; and whose the alternating copolymer structure is CO₂-EO-CO₂-EO-EO-CO₂.

9. Method for producing polyethylene carbonate with metal salts according to any of the Claims 1 to 5, **characterized by** using zeoliteY-P₂S₅-Co catalyst which, in ethylene oxide and carbon dioxide copolymerization in order for the reaction to have polyethylene carbonate selectivity of 99% in weight, and to synthesize polyethylene carbonate; which has average molecular weight of (Mw) (Mw) 127,800 g/mol; includes low molecular weight PEC with an average molecular weight of (Mw) 5000-7000 g/mol, 2% in weight; has a glass transition temperature of 15 °C, a melting temperature of 42 °C and copolymer yield of 801 g polymer/g catalyst; and whose the alternating copolymer structure is CO₂-EO-CO₂-EO-EO-CO₂-EO-EO-EO-CO₂.

## Patentansprüche

1. Verfahren zur Herstellung von Polyethylencarbonat mit Metallsalzen, welches zur Erhöhung der Copolymerisationsausbeute zur Herstellung von Polyethylenecarbonate durchgeführt wird, **dadurch gekennzeichnet, dass** es aus den folgenden Schritten besteht:
- Mischen und Umsetzen von P₂S₅-Lösung mit Zeolith Y,
- Umsetzen der durch P₂S₅ und Zeolith Y gebildete neue Struktur mit Metallsalz,
- Entfernung von denjenigen, die von der Mischung nicht abreagieren
- Trocknen des Reaktionsproduktes Zeotlith Y-P₂S₅-Me Katalysator im Trockenofen
- Zufuhr von EO (Ethylenoxid) -Lösung und CO₂ (Kohlendioxidgas) zum Reaktor für die Produktion von PEC (Polyethylencarbonat),
- Zugabe von synthetisierten Y-P₂S₅-Me-Zeolithkatalysatoren zum Reaktor in der PEC-Produktion mit EO- und CO₂-Copolymerisation und Durchführung der Reaktion
- Trennen des Katalysators von dem Copolymeren nach der Copolymerisation,
- Erhalten von PEC-Copolymer als Endprodukt.

2. Verfahren zur Herstellung von Polyethylencarbonat mit Metallsalzen nach Anspruch 1, **gekennzeichnet durch** die Verwendung von P₂S₅ als Wärmestabilisator in Y-F₂S₅-Me Zeolith-Katalysatorstruktur, damit das Produkt gegen hohen Temperaturen ohne Zersetzung widersteht.

3. Verfahren zur Herstellung von Poleyethylenecarbonat mit Metallsalzen nach einem der vorangehenden Ansprüche, **gekennzeichnet durch** Zeolith Y-P₂S₅ Metallkatalysator, wobei mindestens ein Metallsalz, das von einer Metallsalzgruppe von ZnCl₂, CrCl₃, NiCl₂ und CoCl₂ gewählt wird, verwendet wird, um bei der PEC-Herstellung verwendet zu werden.

4. Verfahren zur Herstellung von Poleyethylenecarbonat mit Metallsalzen nach einem der vorangehenden Ansprüche, **dadurch gekennzeichnet, dass** die Reaktion mit Metallsalzzugabe in Ethanolmedium bei 45-50 °C Temperaturbereich für eine Zeit von 2,5-3 Stunden in dem Schritt des Umsetzens der Struktur durchgeführt wird, die als ein Ergebnis der OH-Ionen an Zeolith Y und P₂S₅ -Verbindung mit Metallsalzen gebildet wird.

5. Verfahren zur Herstellung von Polyethylenecarbonat mit Metallsalzen nach einem der vorangehenden Ansprüche, **dadurch gekennzeichnet, dass** der Katalysator im Trockenofen bei 40-80°C für 8-24 Stunden getrocknet wird, um für die Verwendung zur Verfügung gestellt zu werden.

6. Verfahren zur Herstellung von Polyethylenecarbonat mit Metallsalzen nach einem der vorangehenden Ansprüche, **gekennzeichnet durch** die Verwendung von Zeotlith Y-P₂S₅-Zn Katalysator in Ethylenoxid und Kohlendioxid- Copolymerisation, damit die Reaktion eine Polyethylencarbonat- Selektivität von 99 Gew.-% aufweist und Polyethylenecarbonat synthesiert, welches ein durchschnittliches Molekulargewicht von (Mw) 144,200 g/mol aufweist, niedermolekulargewichtigen PEC mit einem durchschnittlichen Molekulargewicht von (Mw) 5000-7000 g/mol enthält, 7 Gew.-% eine Glasübergangstemperatur von 25°C, eine Zersetzungstemperatur von 218 °C und Copolymerausbeute von 884g polymer/g Katalysator hat, und deren alternierende Copolymerstruktur EO-CO₂-EO-CO₂ ist.

7. Verfahren zur Herstellung von Polyethylenecarbonat mit Metallsalzen nach einem der Ansprüche 1 bis 5, **gekennzeichnet durch** die Verwendung von Zeotlith Y-P₂S₅-Cr Katalysator in Ethyleneoxide und Copolymerisation von Kohlendioxide, damit die Reaktion eine Polyethylencarbonat- Selektivität von 97 Gew.- % aufweist und Polyethylenecarbonat synthesiert, welches ein durchschnittliches Molekulargewicht von (Mw) (Mw) 138,500 g/mol aufweist; niedermolekulargewichtigen PEC mit einem durchschnittlichen Molekulargewicht von (Mw) 5000-7000 g/mol, 7 Gew.-% enthält; und eine Glasübergangstemperatur von 23 °C, eine Zersetzungstemperatur von 220 °C und Copolymerausbeute von 643 g polymer/g Katalysator hat, und deren alternierende Copolymerstruktur EO-CO₂-EO-CO₂ ist.

8. Verfahren zur Herstellung von Polyethylenecarbonat mit Metallsalzen nach einem der Ansprüche 1 bis 5, **gekennzeichnet durch** die Verwendung von Zeotlith Y-P₂S₅-Ni Katalysator in Ethyleneoxide und Copolymerisation von Kohlendioxide, damit die Reaktion eine Polyethylencarbonat- Selektivität von 90 Gew.- % aufweist und Polyethylenecarbonat synthesiert, welches ein durchschnittliches Molekulargewicht von (Mw) (Mw) 124,000 g/mol aufweist; niedermolekulargewichtigen PEC mit einem durchschnittlichen Molekulargewicht von (Mw) 5000-7000 g/mol, 4 Gew.-% enthält; und eine Glasübergangstemperatur von 13 °C, eine Schmelztemperatur von 50 °C und Copolymerausbeute von 454 g polymer/g Katalysator hat, und deren alternierende Copolymerstruktur CO₂-EO-CO₂-EO-EO-CO₂ ist.

9. Verfahren zur Herstellung von Polyethylenecarbonat mit Metallsalzen nach einem der Ansprüche 1 bis 5, **gekennzeichnet durch** die Verwendung von Zeotlith Y-P₂S₅-Co Katalysator in Ethyleneoxide und Copolymerisation von Kohlendioxide, damit die Reaktion eine Polyethylencarbonat- Selektivität von 99 Gew.- % aufweist und Polyethylenecarbonat synthesiert, welches ein durchschnittliches Molekulargewicht von (Mw) 127,800 g/mol aufweist; niedermolekulargewichtigen PEC mit einem durchschnittlichen Molekulargewicht von (Mw) 5000-7000 g/mol, 2 Gew.-% enthält; und eine Glasübergangstemperatur von 15 °C, eine Schmelztemperatur von 42 °C und Copolymerausbeute von 801 g polymer/g Katalysator hat, und deren alternierende Copolymerstruktur CO₂-EO-CO₂-EO-EO-CO₂-EO-EO-EO-CO₂ ist.

## Revendications

1. Procédé de production de polyéthylène carbonate avec des sels métalliques, qui est mis en oeuvre pour augmenter le rendement de copolymérisation dans la production de carbonate de polyéthylène, **caractérisé en ce qu'**il consiste en les étapes consistant à:
- mélanger et faire réagir une solution de P₂S₅ avec de la zéolite Y,
- faire réagir la nouvelle structure formée par P₂S₅ et la zéolite Y avec un sel métallique,
- enlever ceux qui ne réagissent pas du mélange,
- séchage du catalyseur de zéolithe Y-P₂S₅-Me de produit de réaction dans un four de séchage,
- l'alimentation de la solution EO (oxyde d'éthylène) et du CO₂ (gaz carbonique dans le réacteur pour la production de PEC (polyéthylène carbonate),
- l'addition de catalyseurs de zéolithe Y-P₂S₅-Me synthétisés dans le réacteur en PEC production avec copolymérisation EO et CO₂, et réalisation de la réaction,
- séparer le catalyseur du copolymère après la copolymérisation,
- l'obtention d'un copolymère PEC comme produit final.

2. Procédé de production de carbonate de polyéthylène avec des sels métalliques selon la revendication 1, **caractérisé par** l'utilisation de P₂S₅ comme stabilisant thermique dans une structure de catalyseur de zéolite Y-P₂S₅-Me pour que le produit résiste aux hautes températures sans dégradation.

3. Procédé de production de polyéthylène carbonate avec des sels métalliques selon l'une quelconque des revendications précédentes, **caractérisé par** un catalyseur métallique zéolithe Y-P₂S₅, dans lequel au moins un sel métallique est choisi parmi le groupe sel métallique de ZnCl₂, CrCl₃, NiCl₂ et CoCl₂, est utilisé pour être utilisé dans la production de PEC.

4. Procédé de production de carbonate de polyéthylène avec des sels métalliques selon l'une quelconque des revendications, **caractérisé en ce que** la réaction est effectuée avec addition de sel métallique dans un milieu éthanol à une température comprise entre 45-50°C pendant une durée de 2.5-3 heures la structure formée à la suite des ions OH sur la zéolite Y et le composé P₂S₅ avec des sels métalliques.

5. Procédé de production de carbonate de polyéthylène avec des sels métalliques selon l'une quelconque des revendications précédentes, **caractérisé en ce que** le catalyseur est séché dans l'étuve à 40-80°C pendant 8-24 heures pour être rendu utilisable.

6. Procédé de production de carbonate de polyéthylène avec des sels métalliques selon l'une quelconque des revendications précédentes, **caractérisé par** l'utilisation un catalyseur de zéolite Y-P₂S₅-Zn dans une copolymérisation d'oxyde d'éthylène et de dioxyde de carbone pour obtenir une sélectivité en polyéthylène carbonate de 99% et pour synthétiser du polyéthylène carbonate; qui a un poids moléculaire moyen de (Mw) 144,200 g/mol; comprend des PEC de faible poids moléculaire avec un poids moléculaire moyen de (Mw) 5000-7000 g/mol, 7% en poids; a une température de transition vitreuse de 25°C, une température de dégradation de 218°C et un rendement en copolymère de 884 g de polymère/g de catalyseur; et dont la structure de copolymère alterné est EO-CO₂-EO-CO₂.

7. Procédé de production de carbonate de polyéthylène avec des sels métalliques selon l'une quelconque des revendications 1 à 5, **caractérisé par** l'utilisation un catalyseur de zéolite Y-P₂S₅-Cr dans une copolymérisation d'oxyde d'éthylène et de dioxyde de carbone pour obtenir une sélectivité en polyéthylène carbonate de 97% et pour synthétiser du polyéthylène carbonate; qui a un poids moléculaire moyen de (Mw) (Mw) 138,500 g/mol; comprend des PEC de faible poids moléculaire avec un poids moléculaire moyen de (Mw) 5000-7000 g/mol, 7% en poids; a une température de transition vitreuse de 23°C, une température de dégradation de 220°C et un rendement en copolymère de 643 g de polymère/g de catalyseur; et dont la structure de copolymère alterné est EO-CO₂-EO-CO₂.

8. Procédé de production de carbonate de polyéthylène avec des sels métalliques selon l'une quelconque des revendications 1 à 5, **caractérisé par** l'utilisation un catalyseur de zéolite Y-P₂S₅-Ni qui, dans une copolymérisation d'oxyde d'éthylène et de dioxyde de carbone pour obtenir une sélectivité en polyéthylène carbonate de 90% et pour synthétiser du polyéthylène carbonate; qui a un poids moléculaire moyen de (Mw) (Mw) 124,000 g/mol; comprend des PEC de faible poids moléculaire avec un poids moléculaire moyen de (Mw) 5000-7000 g/mol, 4% en poids; a une température de transition vitreuse de 13°C, une température de fusion de 50°C et un rendement en co polymère de 454 g de polymère/g de catalyseur; et dont la structure de copolymère alterné est CO₂-EO-CO₂-EO-EO-EO-CO₂.

9. Procédé de production de carbonate de polyéthylène avec des sels métalliques selon l'une quelconque des revendications 1 à 5, **caractérisé par** l'utilisation un catalyseur de zéolite Y-P₂S₅-Co qui, dans une copolymérisation d'oxyde d'éthylène et de dioxyde de carbone pour obtenir une sélectivité en polyéthylène carbonate de 99% et pour synthétiser du polyéthylène carbonate; qui a un poids moléculaire moyen de (Mw) (Mw) 127,800 g/mol; comprend des PEC de faible poids moléculaire avec un poids moléculaire moyen de (Mw) 5000-7000 g/mol, 2% en poids; a une température de transition vitreuse de 15°C, une température de fusion de 42°C et un rendement en co polymère de 801 g de polymère/g de catalyseur; et dont la structure de copolymère alterné est CO₂-EO-CO₂-EO-EO-CO₂-EO-EO-EO-CO₂.
